# EUROPEAN PATENT APPLICATION

(11) **EP 4 471 667 A1**
(43) Date of publication of application: **04.12.2024**
(21) Application number: 23177023.1
(22) Date of filing: 02.06.2023
(51) Int. Cl.: G06N 3/08, G06N 20/00, G06Q 10/0875, G06Q 10/10, G06Q 50/04

(54) **A METHOD FOR OPERATING A USER PLATFORM, A COMPUTER PROGRAM PRODUCT, A COMPUTER-READABLE STORAGE MEDIUM AS WELL AS A USER PLATFORM**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The invention relates to a method for operating a user platform (10), comprising the steps of:
-receiving at least one documentation document (12, 14, 16) for assembling a component arrangement by a receiving device (18) of the user platform (10); (S1)
- receiving a bill of materials (20) of the component arrangement by the receiving device (18); (S2)
- analyzing the at least one documentation document (12, 14, 16) regarding each component of the component arrangement by an electronic computing device (22) of the user platform (10); (S3) and
- mapping each component of the at least one documentation document (12, 14, 16) with each component of the bill of materials (20) depending on the analyzation (24) by the electronic computing device (22). (S4)

Furthermore, the invention relates to a computer program product, a computer-readable storage medium, as well as to a user platform (10).

## Description

Independent of the grammatical term usage, individuals with male, female or other gender identities are included within the term.

The invention relates to a method for operating a user platform according to the independent claim 1. Furthermore, the invention relates to a corresponding computer program product, a corresponding computer-readable storage medium as well as to a corresponding user platform.

The assembly of industrial production orders is guided by different technical documents and drawings. These documents contain the components a worker on a so-called "shop floor" has to assemble. For the production of for example control cabinets, several different documents are needed, which the workers have to go through manually to find the right component and its position to build in.

Components can appear not only in one document but found in several documents and different document types. Each of these documents may have up to hundreds of pages, with a high variety of different drawings as well as different ways to represent these components. In addition, the components found must be assigned to a so-called "material number" in a so-called "bill of materials", which is required for installation.

The searching and mapping process has a high manual effort for each worker and takes up to several hours a day. Today, there is no automated way to search for components across documents and automatically link them to the correct material number in other relevant documents. Simply extracting the text of components from the documents and matching them with components specified in the bill of materials is not trivial as these are in different formats, for example different fonts, font sizes, and document sizes, often are shortened or concinnated with other components, and often have drawings and other text, for example super script or other components, in its surroundings.

Today, the problem is mostly solved by a manual search in for example PDFs using a search function. In the majority, for drawings or plans this is not possible, therefore the search is based on manual scrolling through the documents and manual mapping to other technical documents and to the correct material number extracted from the bill of materials or systems.

There are many techniques known in the field of the so-called "OCR-technology", most of them are not focused on extracting symbols from technical drawings and engineering documents. However, the so-called "OCR-technology" is well known for extracting, for example text passages.

It is an object of the present invention to provide a method, a corresponding computer program product, a corresponding computer-readable storage medium as well as a corresponding user platform, by which assembling a component arrangement may be realized in a more efficient way.

This object is solved by a method, a corresponding computer program product, a corresponding computer-readable storage medium, as well as a corresponding user platform.

One aspect of the invention relates to a method for operating a user platform. At least one documentation document for assembling a component arrangement is received by a receiving device of the user platform. A bill of materials of the component arrangement is received by the receiving device. The at least one documentation document is analyzed regarding each component of the component arrangement by an electronic computing device of the user platform. Each component of the at least one documentation component is mapped with each component of the bill of materials depending on the analyzation by the electronic computing device.

This has the advantage compared to prior art that via the user platform not only searching of components is possible but rather the matching of components to the right material number in the bill of materials as well as to related components in various documents is realized. To realize this advantage the solution combines different state of the art technologies into one tool for the shop floor. For searching and mapping itself, for example image transformation may be used and may be combined with formulated matching rules. To visualize functionalities to the user/worker the components may be highlighted in drawings and automatically zoomed into the right page and position of component.

In particular, a list of components is extracted from the bill of materials. The documentation document, which may be for example a so-called "PDF", comprising drawings or text may be transformed into images. A zoom level may be applied when transforming the PDF into images. This zoom level is adjusted depending on the type of technical document that is being transformed for a better OCR (optical character recognition) performance. Components are extracted from the component arrangement. The configuration parameters may be fine-tuned for a better performance of the software for the type of documents at hand.

In particular, doing only a direct matching may not be enough, as the number of matches would not be high enough for the solution to be useful. This is because the components in the technical drawings often are shortened or concinnated with other components, and often have drawings and other text, for example super script or other components, in its surroundings that may also be extracted by the OCR.

Therefore, there may be a need to implement rules that look at not only the format of the extracted text but also the extracted text in the surrounding area and apply transformation to it to try to find as many components as possible.

In particular, the invention is an artificial intelligence-based solution, supporting the assembly work by bringing common and related information dispersed across technical documents into one single, searchable user platform. This may reduce search times by 1.5 hours a day for a worker, speeds up the process of assembly understanding and may gain up to 20 percent higher productivity.

Furthermore, the user platform may be configured as a server. For example, a user may input a search query and at least the bill of materials and the documentation document at an edge device. The documents may be saved for a searching process. The user platform, in particular the electronic computing device, may analyze and map the components to the bill of materials. Then the electronic computing device may perform the search. The results may be presented on a display device, for example on a display device of the edge device.

According to an embodiment the at least one documentation document is analyzed by using a text mining algorithm. Therefore, via text mining, it is easy to find components in the text, wherein these components may then be mapped with the components of the bill of materials.

In another embodiment the at least one documentation document is analyzed by using an image recognition algorithm. In particular, the bills of materials as well as the documentation document is analyzed by using the image recognition algorithm in order to determine and map the location of the components in the documentation document. This has the advantage, that each component may be analyzed and mapped with high effort.

According to another embodiment as the at least one documentation document a circuit diagram of the component arrangement and/or a mechanical drawing of the component arrangement and/or a design plan of the component arrangement is received. In particular, all technical documentation of the component arrangement may be used. In particular, more than two documentation documents may be analyzed and mapped to the bill of materials. In particular, if, for example, the component arrangement comprises a plurality of documentation documents, all these documents may be used and analyzed and therefore mapped with the bill of materials. Therefore, the assembling efficiency may be raised.

In another embodiment the circuit drawing and/or the mechanical drawing and/or the design plan is analyzed at least in two different positions of the drawings. In particular, for each image, the OCR algorithm runs three times, one with no rotation, one with the image rotated for example in 90 degrees, and finally with the image rotated in -90 degrees. All extracted text and their coordinates from the three runs may be saved and compared to the list of components to find what may be searched. Therefore, a high quality of analyzation of the components is provided.

In another embodiment a position of the component in the documentation document is determined and the position of the component is mapped with the bill of materials. For example, it may be provided, that the component is provided on several pages of the documentation document, wherein these pages are linked to the component and are mapped with the component in the bill of materials. Therefore, for example a user may have a look at the bill of components/bill of materials and the page position of the component may be presented for the user.

In another embodiment a position of the component in a text of the documentation document and/or a position of the component in a drawing of the documentation document is mapped with the bill of materials. For example, the position in the text as well as the position of the component in the drawing may be highlighted after a search of a user. For example a number of a drawing comprising the searched component may be presented as the position. Therefore, a user of the user platform may get an easy overview of the component, and where the assembling process of the component is presented in the documentation document.

In another embodiment the electronic computing device uses a trained algorithm for analyzing and/or mapping. In particular, the trained algorithm may be an artificial intelligence algorithm, for example a neural network. Therefore the mapping and analyzing process is performed in a high effort.

In another embodiment the component is matched with a material number of the component in the bill of materials. In particular, the bill of materials comprises a list of material numbers and for example component abbreviations. The abbreviations may then be mapped with the material numbers and therefore it is easy for a user to assemble the component arrangement by using the match of the component with the material number.

In another embodiment depending on a user input a component of the component arrangement is searched by the electronic computing device and a component information of the searched component is presented on a display device of the user platform. For example, a user may input a search for a component number. Therefore, the electronic computing device may search the component in the component arrangement, in particular in the documentation document. As the component information, for example a position of the component, for example a page number, may be presented on a display device. Furthermore, the component information may be highlighted on the display device for the user.

According to another embodiment for analyzing the at least one documentation document is binarized. Therefore, for example information about the color may be reduced in just a black and white binary document. This makes it easy to analyze and match the components. This may lead to a reduced computing time during the analyzation and therefore raises the computing effort to match the components.

In another embodiment for mapping the component surroundings of the component in the documentation document are taken into consideration. In particular, by using the OCR there will be often not an exact match with the component listed in the bill of materials. This is due that sometimes more then one component is being represented in the same text or in other situations, only part of the component is written. Furthermore, some of the drawings around the component names look like characters, adding noise to the extracted text. Due to all the examples listed above, a direct matching may be not enough as the number of matches would be not high enough for the solution to be useful. So, there is a need to implement rules that look at not only the format of the extracted text but also the extracted text in the surroundings area and apply transformations to it to try to find as many components as possible.

In particular, the presented method is a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the invention relates to a user platform for a user, comprising at least one receiving device and one electronic computing device, wherein the user platform is configured for performing a method according to the preceding aspect. In particular, the method is performed by the user platform.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM. An artificial neural network/artificial intelligence can be understood as a software code or a compilation of several software code components, wherein the software code may comprise several software modules for different functions, for example one or more encoder modules and one or more decoder modules.

An artificial neural network can be understood as a nonlinear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The neural network comprises several modules including the encoder module and the at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

For use cases or use situations which may arise in the method and which are not explicitly described here, it may be provided that, in accordance with the method, an error message and/or a prompt for user feedback is output and/or a default setting and/or a predetermined initial state is set.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

Therefore the drawings show in:
- FIG 1: a schematic flow chart according to an embodiment of the method;
- FIG 2: a schematic block diagram according to an embodiment of a user platform; and
- FIG 3: another schematic flow chart according to an embodiment of the method.

In the figures the same elements are comprising this element signs.

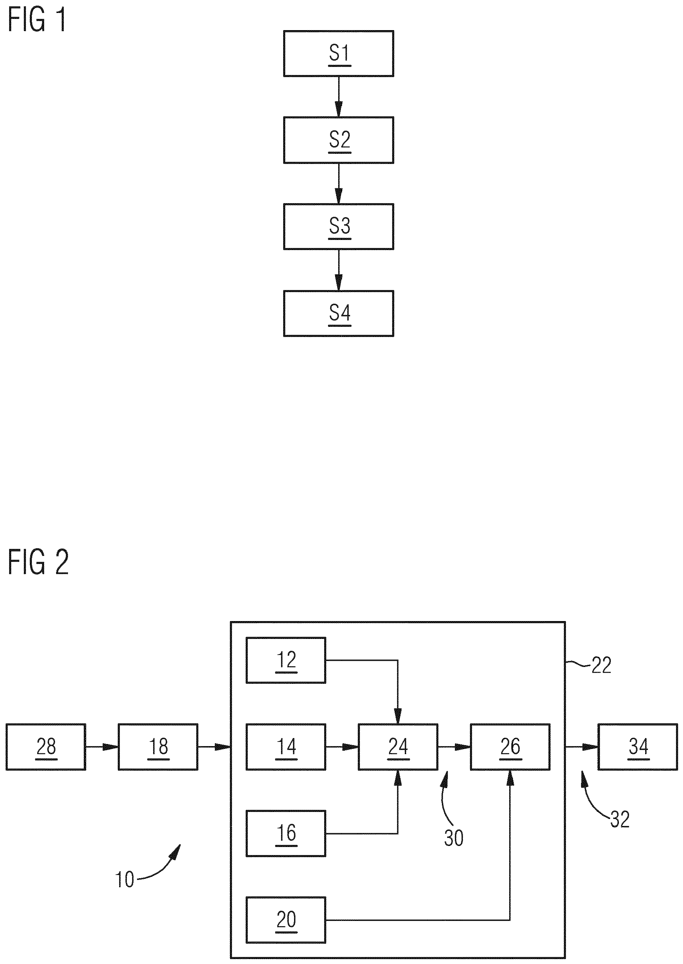

FIG 1 shows a schematic flow chart according to an embodiment of the method. In particular, FIG 1 shows a method for operating a user platform 10 (FIG 2). In a first step S1 at least one documentation document 12, 14, 16 (FIG 2) for assembling a component arrangement is received by a receiving device 18 (FIG 2) of the user platform 10. A bill of materials 20 of the component arrangement is received by the receiving device 18 in a second step S2. The at least one documentation document 12, 14, 16 is analyzed regarding each component of the component arrangement by an electronic computing device 22 of the user platform 10 in a third step S3. In a fourth step S4 each component of the at least one documentation document is mapped with each component of the bill of materials 20 depending on the analyzation 24 (FIG 2) by the electronic computing device 22.

FIG 2 shows a schematic block diagram according to an embodiment of the user platform 10. In particular, FIG 2 shows the electronic computing device 22, wherein after the analyzation 24 a mapping 26 is shown. In particular FIG 2 shows that the receiving device 18 may receive a user input 28. The user input 28 may comprise for example the documentation document 12, 14, 16, the bill of materials 20. Later on, for example a search queue in order to search for a component may be received.

FIG 2 shows that the at least one documentation document 12, 14, 16 may be for example a circuit diagram 12 of the component arrangement and/or a mechanical drawing 14 of the component arrangement and/or a design plan 16 of the component arrangement. The at least one documentation document 12, 14, 16 may be analyzed by using a text mining algorithm and/or by using an image recognition algorithm.

Furthermore, a position of the component in the documentation document 12, 14, 16 may be determined and the position of the component is mapped with the bill of materials 20. Furthermore, a position of the component in a text of the documentation document 12, 14, 16 and/or a position of the component in a drawing of the documentation document 12, 14, 16 is mapped with the bill of materials 20.

Furthermore it is shown, that the electronic computing device 22 may use a trained algorithm 30 for analyzing and/or for mapping 26. Furthermore, the component may be matched with a material number of the component in the bill of materials 20.

FIG 2 shows further, that depending on the user input 28 a component of the component arrangement is searched by the electronic computing device 22 and a component information 30 of the searched component is presented on a display device 34 of the user platform 10, for example on an edge device.

In particular, production orders are composed of different technical documents. Each of these documentation documents 12, 14, 16 may have up to hundreds of pages, with a high variety of different drawings in it, as well as different ways to represent these components. Extracting the text of components and matching them with the component specified in the bill of materials 20 is not trivial as these are often shortened or concinnated with other components, often have drawings and other text, for example super scripts, other components, in its surroundings, introducing noise with extraction and are different formats, for example different fonts, font sizes and documentation sizes.

Besides the performance of the OCR and component extraction itself, other essential aspects needed to be considered when designing the provided solution. Extracting the components from these files using an OCR is a time-consuming and computation-heavy task. Designing a product that is scalable to manage hundreds of orders in for example a cost-effective way is not rudimentary. Furthermore, all the received and created data needs to be safely secured. Therefore, the challenges are the scalability, the security and the cost-efficiency.

The solution for a scalability uses one of the basic of so-called "Big Data", in particular split and conquer, to perform processing of production order per document and per page. In this way, the solution may manage orders with hundreds of pages in less than five minutes. The use of, for example a cloud provider, aims to increase the scalability of the user platform 10, as it has scalable and high available services. Furthermore, the shown embodiment provides security of different levels. The integration of the product with the system that manages the orders may be performed through a private connection. The components responsible for loading the orders are contained in a virtual private cloud and this may guarantee that there is no connection to the public internet. For data movement, all data is encrypted in transit and at-rest with a custom encryption key unique to the product. In the application the components have been configured with policies that restrict the permission of what each component can do, for example a system component that processes OCR may not have permission to access the data source or to expose data via for example an API. The data access may be secured by containing the product with the API to expose the processing result data to a front end application. Therefore, an API gateway is intended to ensure the security of this connection as it for example guarantees TLS or other protections for text.

In particular, as shown in FIG 2, the invention starts by extracting the list of the components that are part of the order from the bill of materials 20. The drawing may be transformed into images. For example, a zoom level may be applied when transforming the documents into images. This zoom level may be adjusted depending on the type of technical document that is being transformed for a better OCR performance. To extract the components from the images OCR software may be used. Configuration parameters were fine-tuned for a better performance of the software for the type of document at hand. All images may be binarized before going through the OCR. For each image, the OCR is run, for example, three times. One with no rotation, one with the image rotated 90 degrees, and finally one with the image rotated by -90 degrees. All extracted texts and their coordinates from the three runs are saved and compared to the list of components.

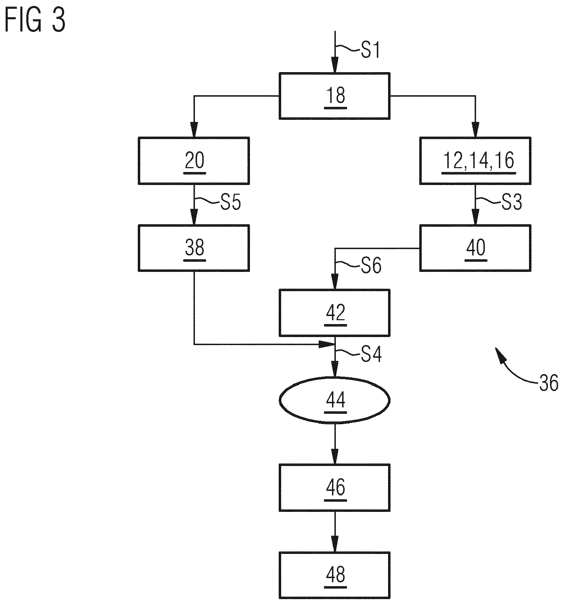

FIG 3 shows another schematic flow chart according to an embodiment of the invention. In particular, FIG 3 shows a so-called OCR mining 36. FIG 3 shows, that the invention starts by extracting the list of components that are part of the bill of materials 20. Therefore, a search query for components to find in the drawing is received, which is shown with the block 38. In particular, a fifth step S5 the documentation documents 12, 14, 16 may be transformed into images. For example, a zoom level is applied when transforming a PDF into images. This zoom level is adjusted depending on the type of technical documents that is being transformed for a better OCR performance shown with a transformation 40. This is shown with the third step S3. After the third step S3 a sixth step S6 may be performed to extract the components from the images, by using the OCR software which is shown with an extraction 42. Configuration parameters were fine-tuned for a better performance of the software for the type of documents at hand. All images may be binarized before going through the OCR. For each image, the OCR is run three times. After that the mapping 26 in the fourth step S4 is provided. Furthermore, the extracted text from the OCR will often not be an exact match with the component listed in the bill of materials 20. This is due to sometimes more then one component is being represented in the same text or in other situation only part of the component is written. Furthermore, some of the drawings around the component names look like characters adding noise to the extracted text. These cases are very hard to avoid during the OCR extraction, as what surrounds the text is hard to predict and can look like characters. But rules may sometimes identify and separate the component name from the whole string. Due to all the examples, doing only a direct matching 44 is not enough as the number of matches would not be high enough for the solution to be useful. So, there is a need to implement rules that look at not only the format of the extracted text but also the extracted text in the surrounding area and apply transformations to it to try to find as many components as possible.

Furthermore, FIG 3 shows that if a match 44 may happen, the match is added to the OCR matches, which is shown in the block 46. The matches 44 are stored in an order table 48.

In order to visualize and utilize the extracted components and combined information for the end-user shop floor worker, the front end may be realized via a local platform as well as customize for example java script developments for highlighting and zooming in technical documents.

In particular FIG 1 to FIG 3 therefore show an AI-based solution, supporting the assembly work by bringing common and related information dispersed across technical documents into one single, searchable user platform 10. This reduces the search times by 1.5 hours a day for a worker, speeds up the process of assembly understanding and may gain up to for example 20 percent of productivity. The solution automates the search and mapping 26 of components across different document types leveraging machine learning. Bill of materials 20, circuit and mechanical drawing are processed through text mining, OCR and image recognition to determine and map the location of the components.

According to the shown embodiment, the invention provides a solution to find a position of every component in the different drawings. The invention also enables linking the same components in different drawing types for the same production order. Furthermore, a shop floor worker may not need to manually map the component number found in the drawing to all other information needed.

## Claims

1. A method for operating a user platform (10), comprising the steps of:
- receiving at least one documentation document (12, 14, 16) for assembling a component arrangement by a receiving device (18) of the user platform (10); (S1)
- receiving a bill of materials (20) of the component arrangement by the receiving device (18); (S2)
- analyzing the at least one documentation document (12, 14, 16) regarding each component of the component arrangement by an electronic computing device (22) of the user platform (10); (S3) and
- mapping each component of the at least one documentation document (12, 14, 16) with each component of the bill of materials (20) depending on the analyzation (24) by the electronic computing device (22). (S4)

2. A method according to claim 1, **characterized in that** the at least one documentation document (12, 14, 16) is analyzed by using a text mining algorithm.

3. A method according to claim 1 or 2, **characterized in that** the at least one documentation document (12, 14, 16) is analyzed by using an image recognition algorithm.

4. A method according to any one of claims 1 to 3,
**characterized in that** as the at least one documentation document (12, 14, 16) a circuit diagram (12) of the component arrangement and/or a mechanical drawing (14) of the component arrangement and/or a design plan (16) of the component arrangement is received.

5. A method according to claim 4, **characterized in that** the circuit drawing (12) and/or the mechanical drawing (14) and/or the design plan (16) is analyzed at least in two different positions of the drawings.

6. A method according to any one of claims 1 to 5,
**characterized in that** a position of the component in the documentation document (12, 14, 16) is determined and the position of the component is mapped with the bill of materials (20).

7. A method according to claim 6, **characterized in that** a position of the component in a text of the documentation document (12, 14, 16) and/or a position of the component in a drawing of the documentation document (12, 14, 16) is mapped with the bill of materials (20).

8. A method according to any one of claims 1 to 7,
**characterized in that** the electronic computing device uses a trained algorithm for analyzing and/or mapping.

9. A method according to any one of claims 1 to 8,
**characterized in that** the component is matched with a material number of the component in the bill of materials (20) .

10. A method according to any one of claims 1 to 9,
**characterized in that** depending on a user input (28) a component of the component arrangement is searched by the electronic computing device (22) and a component information (32) of the searched component is presented on a display device (34) of the user platform (10).

11. A method according to any one of claims 1 to 10,
**characterized in that** for analyzing the at least one documentation document (12, 14, 16) is binarized.

12. A method according to any one of claims 1 to 10,
**characterized in that** for mapping the component surroundings of the component in the documentation document (12, 14, 16) are taken into consideration.

13. A computer program product comprising program code means for performing a method according to any one of claims 1 to 12.

14. A computer-readable storage medium comprising at least the computer program product according to claim 13.

15. A user platform (10) for a user, comprising at least one receiving device (18) and one electronic computing device (22), wherein the user platform (10) is configured for performing a method according to any of claims 1 to 12.
